# EUROPÄISCHE PATENTSCHRIFT

(11) **EP 1 405 774 B1**
(45) Veröffentlichungstag und Bekanntmachung des Hinweises auf die Patenterteilung: **19.07.2006**
(21) Anmeldenummer: 03021145.2
(22) Anmeldetag: 22.09.2003
(51) Int. Cl.: B60R 21/20

(54) **Gassackmodul**
Airbag module
Module de coussin gonflable

(30) Priorität: 01.10.2002 DE 20215115 U
(43) Veröffentlichungstag der Anmeldung: 07.04.2004
(73) Patentinhaber: TRW Automotive Safety Systems GmbH, 63743 Aschaffenburg (DE)
(72) Erfinder: Schneider, Michael, Dr.-Ing., 63843 Niedernberg (DE)
(74) Vertreter: Kitzhofer, Thomas

(56) Entgegenhaltungen:
- EP-A- 0 738 630
- US-A- 5 409 256
- PATENT ABSTRACTS OF JAPAN vol. 1996, no. 07, 31. Juli 1996 (1996-07-31) & JP 08 058510 A (ASHIMORI IND CO LTD), 5. März 1996 (1996-03-05)
- PATENT ABSTRACTS OF JAPAN vol. 2000, no. 04, 31. August 2000 (2000-08-31) & JP 2000 016225 A (DENSO CORP), 18. Januar 2000 (2000-01-18)
- PATENT ABSTRACTS OF JAPAN vol. 2002, no. 09, 4. September 2002 (2002-09-04) & JP 2002 137742 A (NIPPON PLAST CO LTD), 14. Mai 2002 (2002-05-14)

## Beschreibung

Die Erfindung betrifft ein Gassackmodul gemäß dem Oberbegriff des Anspruchs 1.

In der US 5 409 256 ist ein Gassackmodul gezeigt, bei dem eine einen Gassack aufnehmende Abdeckkappe nach unten vorstehende Einstecklaschen hat, die in Öffnungen eines kreisringförmigen Trägerblechs des Gassackmoduls einrasten. Die Montage der Abdeckkappe am Trägerblech findet durch eine Relativbewegung zwischen diesen beiden Teilen in einer Richtung statt, die der Autrittsrichtung des Gassacks entspricht.

Auch in der US 5 791 682 ist ein Gassackmodul gezeigt, das ein Trägerblech und eine daran anzubringende Abdeckkappe mit Vorder- und Seitenwand hat. Das Trägerblech hat eine Umfangswand mit seitlich ausgestellten, elastischen Rastlaschen, die in Öffnungen in der Seitenwand der Abdeckkappe eingreifen, wenn die Abdeckkappe auf das Trägerblech aufgeschoben wird. Auch hier findet bei der Montage eine Relativbewegung zwischen Abdeckkappe und Trägerblech statt, die in Austrittsrichtung eines Gassacks liegt.

Die gattungsgemäße EP-A-0 738 630 zeigt ein Gassackmodul, bei dem die Abdeckkappe seitliche Öffnungen zur Aufnahme von am Modulgehäuse angeordneten Befestigungselementen aufweist. Die Öffnungen haben eine schlüssellochförmige Geometrie, wobei die Köpfe der Befestigungselemente nur den breiteren Bereich der Öffnung passieren können. Nach dem Aufsetzen der Abdeckkappe wird diese durch eine translatorische Bewegung befestigt. Am unteren Rand der Abdeckkappe sind keilförmige Rampen vorgesehen. die in Anlage an den Rand des Modulgehäuses kommen und eine Rückbewegung verhindern.

Die Abdeckkappe stellt das Bauteil dar, das ein Gassackmodul nach außen, zum Beispiel gegenüber einem Fahrzeuginnenraum abschließt. Bei der Aktivierung des Gassackmoduls wird die Abdeckkappe kontrolliert geöffnet, zumeist vom Gassack selbst. Hierbei ist wichtig, daß die beim Öffnen der Abdeckkappe bzw. beim Austreten des Gassacks ausgeübten hohen Kräfte die Verbindung zwischen der Abdeckkappe und dem Gassackmodul nicht lösen. Wie oben beschrieben, ist bekannt, die Abdeckkappe am Gassackmodul über Rastverbindungen zu befestigen, was den Vorteil hat, daß die Abdeckkappe zur Montage lediglich in oder auf das Modulgehäuse gesteckt werden muß, bis die Rastelemente ineinanderschnappen. Um die Rastverbindung zu sichern, sind jedoch meist zusätzliche Sicherungselemente notwendig, die den auftretenden hohen Kräften standhalten können, was die Zahl der Bauteile und auch die Montagezeit erhöht.

Die Erfindung stellt ein Gassackmodul vor, bei dem eine sichere Verbindung zwischen der Kappe und dem Modulgehäuse auf einfache Art erreicht wird.

Hierzu sind bei einem oben genannten Gassackmodul die Merkmale des Anspruch 1 vorgesehen. Die Austrittsrichtung ist zumindest im wesentlichen die Richtung, in der der Gassack aus dem Modul austritt. Die Austrittsrichtung ist bei relativ ebenen Kappenvorderseiten eine Senkrechte zur Kappenvorderseite. Die Austrittsöffnung entspricht auch der Richtung, entlang der der austretende Gassack von der Modulinnenseite her eine Kraft auf die Abdeckkappe ausübt, stellt also, allgemein gesprochen, eine Richtung dar, entlang derer hohe Kräfte auf die Verbindung zwischen Abdeckkappe und Modulgehäuse wirken. Die Einsteckrichtung entlang derer die Befestigungselemente miteinander in Eingriff gebracht werden und die gewöhnlich die Richtung darstellt, entlang derer die Verbindung mit der geringsten Kraft lösbar ist, liegt erfindungsgemäß senkrecht zu dieser Richtung der höchsten Kraftbelastung. Die ersten und zweiten Befestigungselemente sind von einem Fachmann in ihrer Gestaltung einfach hinsichtlich der jeweiligen Anforderungen optimierbar, so daß die Befestigung einer hohen Kraft in Austrittsrichtung, also senkrecht zur Einsteckrichtung standhalten kann. Die beschriebene Art der Befestigung von Abdeckkappe und Modulgehäuse aneinander ist auch unanfällig gegenüber dynamischen Effekten, wie sie beim Austreten des Gassacks auf die Verbindung der Befestigungselemente wirken können.

An der Abdeckkappe und am Modulgehäuse sind zusätzlich zu den ersten und zweiten Befestigungselementen Sicherungsrastelemente vorgesehen, über die, wenn die ersten und zweiten Befestigungselemente miteinander in Eingriff sind, eine zusätzliche Sicherungsrastverbindung ausgebildet ist, die die Abdeckkappe am Modulgehäuse zusätzlich sichert. Hierdurch läßt sich ein unbeabsichtigtes Lösen der Abdeckkappe vom Modulgehäuse, z.B. durch Losrütteln aufgrund von Fahrzeugvibrationen, verhindern.

Die Sicherungsrastverbindung wird bevorzugt durch eine Relativbewegung der Sicherungsrastelemente in einer zu der Bewegung längs der Seitenwand im wesentlichen senkrechten Richtung geschlossen, wobei die Schließbewegung bevorzugt auch senkrecht zur Austrittsrichtung erfolgt, also z.B. zur Seitenwand hin.

Die zusätzliche Sicherungsrastverbindung kann z.B. durch am Modulgehäuse ausgebildete Vertiefungen und an den zweiten Befestigungselementen ausgebildete Vorsprünge realisiert sein, so daß die Sicherungsrastverbindung im gleichen Arbeitsschritt geschlossen wird, in dem die ersten und zweiten Befestigungselemente miteinander in Eingriff gebracht werden.

Im Gegensatz zu bekannten zur Verbindung von Abdeckkappe und Gassackmodul eingesetzten Rastverbindungen erfolgt der Eingriff der Befestigungselemente nicht durch eine Auslenkung der Elemente senkrecht zu einer Seitenwand, sondern durch eine Bewegung der Befestigungselemente entlang einer Seitenwand so daß die Rastverbindung unempfindlich gegen Lösen bei Deformation der Seitenwand ist.

Der Eingriff der ersten und zweiten Befestigungselemente kommt in einer bevorzugten Ausführungsform durch eine Translationsbewegung der Abdeckkappe als Ganzes und des Modulgehäuses als Ganzes relativ zueinander längs einer Seitenwand und quer zur Austrittsrichtung zustande.

In einer anderen bevorzugten Ausfiihrungsform kommt der Eingriff der ersten und zweiten Befestigungselemente durch eine Rotationsbewegung der Abdeckkappe und des Modulgehäuses relativ zueinander jeweils als Ganzes zustande. Auch in diesem Fall liegt die Einsteckrichtung der Befestigungselemente im wesentlichen senkrecht zur Austrittsrichtung des Gassacks, so daß die hohen Kräfte in einer Richtung von den Befestigungselementen aufgenommen werden können, die senkrecht zur schwächsten Richtung der Verbindung ist.

Die Rotationsbewegung erfolgt bevorzugt in einer Ebene, die im wesentlichen senkrecht zur Austrittsrichtung ist.

In dieser Ausfiihrungsform bilden die ersten und zweiten Befestigungselemente bevorzugt einen Bajonettverschluß. Der Bajonettverschluß kann im Ermessen des Fachmanns gemäß den jeweiligen Anforderungen gestaltet sein.

In beiden Ausführungsformen ist bevorzugt wenigstens eine Gruppe der Befestigungselemente an einer Seitenwand angeordnet. Die anderen Befestigungselemente bewegen sich dann längs der Seitenwand, an der die Gruppe der Befestigungselemente angeordnet ist, bis die ersten und zweiten Befestigungselemente in Eingriff gelangen. Die Befestigungselemente können z.B. an der Seitenwand einstückig angeformt sein.

In einer bevorzugten Ausführungsform der Erfindung sind die ersten Befestigungselemente in Form von Laschen und die zweiten Befestigungselemente in Form von Haken ausgebildet. Diese Form von Befestigungselementen läßt sich mit wenig Aufwand, z.B. in einem Spritzgußverfahren, fertigen und bietet eine sichere Befestigung, die eine leichte Bewegung der Befestigungselemente gegeneinander in Einsteckrichtung ermöglicht und gleichzeitig eine hohe Kraftaufnahme durch die Befestigungselemente senkrecht zur Einsteckrichtung erlaubt.

Weitere Merkmale und Vorteile der Erfindung ergeben sich aus der nachfolgenden Beschreibung zweier Ausführungsbeispiele sowie den beigefügten Zeichnungen. In diesen zeigen:
- Figur 1 eine schematische Perspektivansicht eines erfindungsgemäßen Gassackmoduls gemäß einer ersten Ausführungsform;
- Figur 2 eine Schnittansicht der Befestigungselemente des Gassackmoduls aus Figur 1, in einem Zustand, in dem die Befestigungselemente nicht miteinander in Eingriff sind;
- Figur 3 eine Schnittansicht der Befestigungselemente aus Figur 1 in einem Zustand, in dem die Befestigungselemente miteinander in Eingriff sind;
- Figur 4a und Figur 4b Schnittansichten entlang der Linien A-A bzw. B-B aus Figur 3; und
- Figur 5 eine schematische Perspektivansicht eines erfindungsgemäßen Gassackmoduls gemäß einer zweiten Ausführungsform.

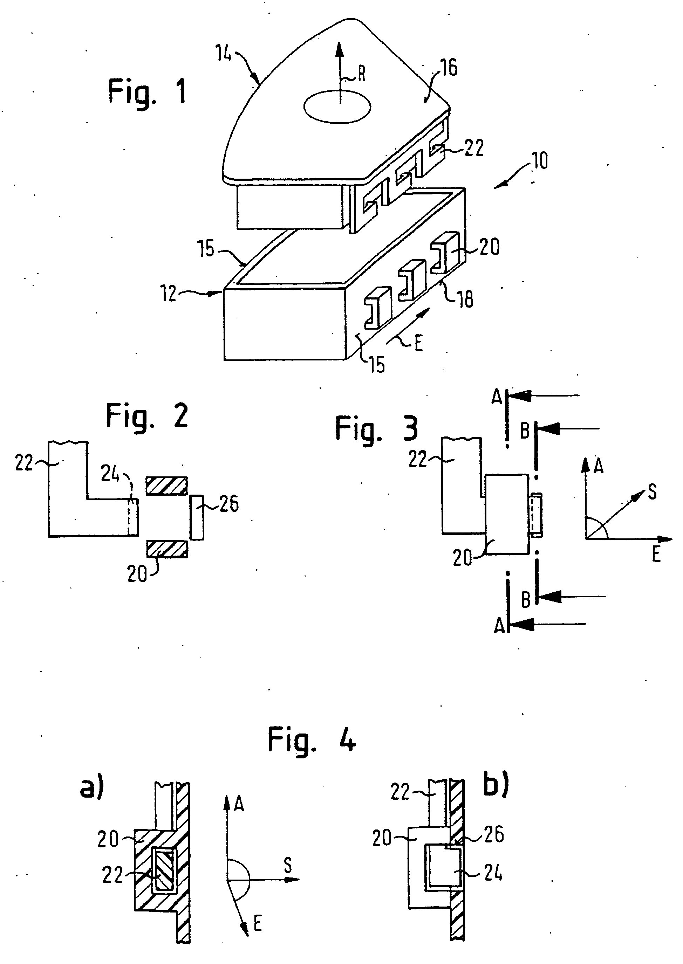

Das in Figur 1 gezeigte Gassackmodul 10 gemäß einer ersten Ausführungsform weist ein Modulgehäuse 12 und eine davon separate Abdeckkappe 14 auf.

Sowohl die Abdeckkappe 14 als auch das Modulgehäuse 12 bestehen in den hier gezeigten Beispielen aus einem geeigneten Kunststoffmaterial, es können aber auch andere Materialien vorgesehen sein.

Das hier gezeigte Modulgehäuse 12 ist ein eigenständiges Bauteil. Es könnte sich aber auch um einen Teil eines Lenkrads oder um ein sonstiges Teil einer Fahrzeugkarosserie handeln, an dem die Abdeckung für einen Gassack oder ein Gassackmodul angebracht ist. Im Modulgehäuse 12 aufgenommen ist ein hier nicht gezeigter Gassack.

Das Gassackmodul 10 weist eine Modulvorderseite 16 und eine Modulrückseite 18 auf, die einander im wesentlichen gegenüber liegen. Die Vorderseite 16 des Gassackmoduls 10 ist durch eine Außenwandung der Abdeckkappe 14 und die Modulrückseite 18 durch eine Außenseite des Modulgehäuses 12 definiert. Die von der Modulrückseite 18 zur Modulvorderseite 16 verlaufende Richtung stellt im wesentlichen eine Austrittsrichtung R des im Modul angeordneten Gassacks bei einer Aktivierung des Gassackmoduls dar. Beim Austreten des Gassacks in Richtung R kann sich die Abdeckkappe 14 an vorbestimmten Stellen öffnen, sie löst sich hierbei jedoch nicht vom Modulgehäuse 12.

Zur Befestigung der Abdeckkappe 14 am Modulgehäuse 12 sind am Modulgehäuse 12 an einer Seitenwand 15 erste Befestigungselemente 20 angeformt, während die Abdeckkappe 14 dazu komplementäre zweite Befestigungselemente 22 trägt.

Die ersten Befestigungselemente 20 sind im hier gezeigten Beispiel durch Laschen verwirklicht, während die zweiten Befestigungselemente 22 in Form von Haken ausgebildet sind. Die Laschen der ersten Befestigungselemente 20 sind U-förmig ausgebildet, wobei die Schenkel des "U" jeweils an einer Wand des Modulgehäuses 12 befestigt sind, so daß die Lasche mit der Seitenwand 15 des Modulgehäuses 12 einen offenen Kanal bildet, durch den jeweils ein Haken eines zweiten Befestigungselements 22 hindurch greifen kann.

Zur Befestigung der Abdeckkappe 14 am Modulgehäuse 12 werden die ersten und zweiten Befestigungselemente 20 und 22 längs der Seitenwand 15 in einer senkrecht zur Richtung R liegenden Einsteckrichtung E durch eine Translationsbewegung ineinander geschoben, so daß die Haken in die Laschen greifen (Figuren 2 bis 4). Hierzu werden die Abdeckkappe 14 und das Modulgehäuse 12 jeweils als Ganzes relativ zueinander bewegt.

Die Austrittsrichtung R stellt die Hauptbelastungsrichtung der Verbindung 20, 22 dar. Da diese Hauptbelastungsrichtung senkrecht zur Einsteckrichtung E liegt, in der die Verbindung 20, 22 zustande kommt, wird die Verbindung der ersten und zweiten Befestigungselemente 20, 22 in Einsteckrichtung keinen hohen Kräften ausgesetzt. In der Austrittsrichtung R können die Haken und Laschen der Befestigungselemente 20, 22 den auftretenden hohen Kräften leicht standhalten.

Wie in den Figuren 2 bis 4 gezeigt ist, sind bei der gezeigten Ausführungsform zusätzliche Sicherungsrastelemente vorgesehen, deren Rastverbindung ein ungewolltes Lösen der Verbindung der ersten und zweiten Befestigungselemente 20, 22 in Einsteckrichtung verhindert. Hierzu sind an der Spitze der Haken der zweiten Befestigungselemente 22 zum Inneren der Abdeckkappe 14 gerichtete Vorsprünge 24 ausgebildet, während in der Seitenwand 15 des Modulgehäuses 12 in Einsteckrichtung E gesehen direkt hinter den Laschen der ersten Befestigungselemente 20 Vertiefungen 26 ausgebildet sind. Beim Einschieben der zweiten Befestigungselemente 22 in die ersten Befestigungselemente 20 greifen zunächst die Haken in die Laschen ein. Wenn die zweiten Befestigungselemente 22 komplett in die Laschen der ersten Befestigungselemente 20 eingeschoben sind, greifen die Vorsprünge 24 in einer Richtung S sowohl senkrecht zur Einsteckrichtung E als auch zur Austrittsrichtung R in die Vertiefungen 26 ein und sichern so die Verbindung 20, 22 gegen eine Bewegung in negativer Eingriffsrichtung E (siehe Figuren 3 und 4b).

Die zusätzliche Sicherungsrastverbindung 24, 26 braucht keinen hohen Kräften standzuhalten. Sie dient z.B. dazu, ein Lösen der Befestigungselemente 20, 22 durch Fahrzeugvibrationen zu verhindern. Die hohen Kräfte hingegen, die beim Austreten des Gassacks in Richtung R auftreten, werden hauptsächlich von den Haken und Laschen der ersten und zweiten Befestigungselemente 20, 22 aufgenommen, wie dies in Figur 4a und Figur 3 zu erkennen ist.

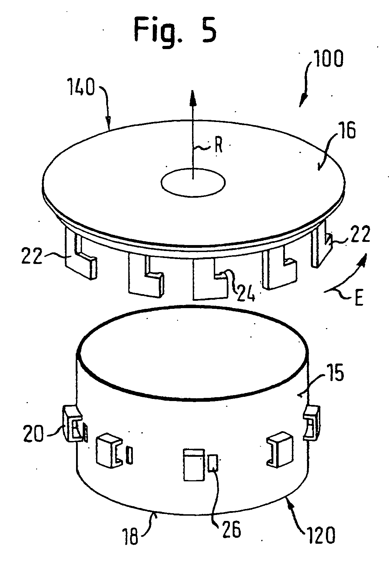

Figur 5 zeigt eine zweite Ausführungsform der Erfindung, bei der die Abdeckkappe 140 des Gassackmoduls 100 sowie das Modulgehäuse 120 zylinderförmig ausgebildet sind und die ersten und zweiten Befestigungselemente 20, 22 in Form eines Bajonettverschlusses ineinander greifen. Die Gestaltung der Befestigungselemente 20, 22 entspricht der in Verbindung mit der ersten Ausführungsform beschriebenen.

Wie bei der ersten Ausführungsform liegt auch hier die Einsteckrichtung E senkrecht zur Austrittsrichtung R des Gassacks, die wiederum mit der Richtung zusammenfällt, die von de Rückseite 18 zur Vorderseite 16 des Gassackmoduls 100 verläuft.

Hier sind ebenfalls zusätzliche Sicherungsrastelemente in Form von Vorsprüngen 24 und Vertiefungen 26 vorgesehen, die analog zu denen der ersten Ausfiihrungsform ausgebildet sind.

Selbstverständlich können Art und Form der Befestigungselemente und Sicherungsrastelemente im Ermessen des Fachmanns variiert werden. Wesentlich ist, daß die Befestigungselemente so ausgebildet sind, daß sie in einer zur Einsteckrichtung senkrechten Richtung, die im wesentlichen der Austrittsrichtung des Gassacks entspricht, hohe Kräfte aufnehmen können, während sie zum Herstellen der Verbindungen in Einsteckrichtung leicht gegeneinander beweglich sind.

Auch die Gestaltung der zusätzlichen Sicherungsrastverbindung ist nicht auf die hier beschriebene beschränkt.

## Patentansprüche

1. Gassackmodul mit einem Modulgehäuse (12) und einer Abdeckkappe (14), wobei am Modulgehäuse (12) und/oder an der Abdeckkappe (14) eine Seitenwand (15) vorgesehen ist,
wobei eine Außenwandung (16) der Abdeckkappe (14) eine Vorderseite des Moduls und eine Außenwandung (18) des Modulgehäuses (12) eine Rückseite des Moduls definiert, wodurch eine von der Rückseite zur Vorderseite des Moduls verlaufende Austrittsrichtung (R) vorgegeben ist,
wobei das Modulgehäuse (12) erste Befestigungselemente (20) und die Abdeckkappe (14) zweite Befestigungselemente (22) aufweist, die miteinander in Eingriff gebracht werden können,
die Befestigungselemente (20, 22) so zu einer Seitenwand (15) angeordnet und ausgerichtet sind, daß der Eingriff der ersten und zweiten Befestigungselemente (20, 22), welcher ein Entkoppeln der Abdeckkappe (14) und des Modulgehäuses (12) in Austrittsrichtung (R) verhindert, durch eine Bewegung der Befestigungselemente (20, 22) relativ zueinander in einer Richtung (E) zustande kommt, die längs der Seitenwand (15) und quer zur Austrittsrichtung (R) verläuft,
und zusätzlich zu den ersten und zweiten Befestigungselementen (20, 22) Sicherungsrastelemente vorgesehen sind, über die, wenn die ersten und zweiten Befestigungselemente (20, 22) miteinander in Eingriff sind, eine SicherungsRastverbindung (24, 26) ausgebildet ist und über die die Abdeckkappe (14; 140) am Modulgehäuse (12; 120) gesichert ist,
**dadurch gekennzeichnet, daß** die Sicherungsrastelemente am Modulgehäuse (12; 120) und an den zweiten Befestigungselementen (22) ausgebildet sind.

2. Gassackmodul nach Anspruch 1, **dadurch gekennzeichnet, daß** der Eingriff der ersten und zweiten Befestigungselemente (20, 22) durch eine Translationsbewegung der Abdeckkappe (14) als Ganzes und des Modulgehäuses (12) als Ganzes relativ zueinander längs der Seitenwand (15) und quer zur Austrittsrichtung (R) zustande kommt.

3. Gassackmodul nach Anspruch 1, **dadurch gekennzeichnet, daß** der Eingriff der ersten und zweiten Befestigungselemente (20, 22) durch eine Rotationsbewegung der Abdeckkappe (14) und des Modulgehäuses (12) relativ zueinander jeweils als Ganzes zustande kommt.

4. Gassackmodul nach Anspruch 2 oder 3, **dadurch gekennzeichnet, daß** die ersten und zweiten Befestigungselemente (20, 22) einen Bajonettverschluß bilden.

5. Gassackmodul nach einem der vorhergehenden Ansprüche, **dadurch gekennzeichnet, daß** die ersten und/oder die zweiten Befestigungselemente (20, 22) jeweils an einer Seitenwand (15) angeordnet sind.

6. Gassackmodul nach einem der vorhergehenden Ansprüche, **dadurch gekennzeichnet, daß** die ersten Befestigungselemente (20) in Form von Laschen und die zweiten Befestigungselemente (22) in Form vom Haken ausgebildet sind.

7. Gassackmodul nach einem der vorhergehenden Ansprüche, **dadurch gekennzeichnet, daß** die Sicherungsrastverbindung (24, 26) durch am Modulgehäuse (12; 120) ausgebildete Vertiefungen (26) und an den zweiten Befestigungselementen (22) ausgebildete Vorsprünge (24) realisiert ist.

8. Gassackmodul nach einem der vorhergehenden Ansprüche, **dadurch gekennzeichnet, daß** die Sicherungsrastverbindung (24, 26) durch eine Relativbewegung der Sicherungsrastelemente in einer zur Seitenwand (15) und zur Austrittsrichtung (R) im wesentlichen senkrechten Richtung geschlossen wird.

## Claims

1. A gas bag module comprising a module housing (12) and a covering cap (14), a side wall (15) being provided on the module housing (12) and/or on the covering cap (14),
an outer wall (16) of the covering cap (14) defining a front side of the module and an outer wall (18) of the module housing (12) defining a rear side of the module, whereby an outlet direction (R) is predefined that runs from the rear side to the front side of the module,
the module housing (12) having first fastening elements (20) and the covering cap (14) having second fastening elements (22), which can be brought into engagement with each other,
the fastening elements (20, 22) being arranged and oriented in relation to a side wall (15) such that the engagement of the first and second fastening elements (20, 22), which prevents an uncoupling of the covering cap (14) and of the module housing (12) in the outlet direction (R), comes about by a movement of the fastening elements (20, 22) relative to each other in a direction (E) that runs along the side wall (15) and transversely to the outlet direction (R), and
in addition to the first and second fastening elements (20, 22), securing latching elements being provided by means of which a securing latching connection (24, 26) is formed when the first and second fastening elements (20, 22) are in engagement with each other, and the covering cap (14; 140) being secured to the module housing (12; 120) by means of the securing latching elements,
**characterized in that** the securing latching elements are formed on the module housing (12; 120) and on the second fastening elements (22).

2. The gas bag module according to claim 1, **characterized in that** the engagement of the first and second fastening elements (20, 22) comes about by a translational movement of the covering cap (14) as a whole and of the module housing (12) as a whole relative to each other along the side wall (15) and transversely to the outlet direction (R).

3. The gas bag module according to claim 1, **characterized in that** the engagement of the first and second fastening elements (20, 22) comes about by a rotary movement of the covering cap (14) and of the module housing (12) relative to each other, each as a whole.

4. The gas bag module according to claim 2 or 3, **characterized in that** the first and second fastening elements (20, 22) form a bayonet closure.

5. The gas bag module according to any of the preceding claims, **characterized in that** the first and/or the second fastening elements (20, 22) are each arranged on a side wall (15).

6. The gas bag module according to any of the preceding claims, **characterized in that** the first fastening elements (20) are constructed in the form of tongues and the second fastening elements (22) are constructed in the form of hooks.

7. The gas bag module according to any of the preceding claims, **characterized in that** the securing latching connection (24, 26) is realized by depressions (26) formed in the module housing (12; 120) and projections (24) formed on the second fastening elements (22).

8. The gas bag module according to any of the preceding claims, **characterized in that** the securing latching connection (24, 26) is closed by a relative movement of the securing latching elements in a direction substantially perpendicular to the side wall (15) and to the outlet direction (R).

## Revendications

1. Module de coussin à gaz comportant un boîtier de module (12) et un couvercle (14), dans lequel une paroi latérale (15) est prévue sur le boîtier de module (12) et/ou sur le couvercle (14),
une paroi extérieure (16) du couvercle (14) définit une paroi antérieure du module et une paroi extérieure (18) du boîtier de module (12) définit une face postérieure du module, ce qui prédétermine une direction de sortie (R) s'étendant depuis la face postérieure vers la face antérieure,
le boîtier de module (12) présente des premiers éléments de fixation (20) et le couvercle (14) présente des deuxièmes éléments de fixation qui peuvent être amenés en engagement les uns avec les autres,
les éléments de fixation (20, 22) sont agencés et orientés de telle manière par rapport à une paroi latérale (15) que l'engagement des premiers avec les deuxièmes éléments de fixation (20, 22), qui empêche un découplage du couvercle (14) et du boîtier de module (12) en direction de sortie (R), est produit par un mouvement des éléments de fixation (20, 22) les uns par rapport aux autres dans une direction (E) qui s'étend le long de la paroi latérale (15) et transversalement à la direction de sortie (R),
et additionnellement aux premiers et deux éléments de fixation (20, 22), il est prévu des éléments d'enclenchement de sécurité par l'intermédiaire desquels est réalisée une liaison de sécurité par enclenchement (24, 26), lorsque les premiers et deuxièmes éléments de fixation (20, 22) sont engagement les uns avec les autres, et par l'intermédiaire desquels le couvercle (14 ; 140) est bloqué sur le boîtier de module (12 ; 120).

2. Module de coussin à gaz selon la revendication 1, **caractérisé en ce que** l'engagement des premiers et deuxièmes éléments de fixation (20, 22) est produit par un mouvement de translation du couvercle (14) en tant que tout et du boîtier de module (12) en tant que tout l'un par rapport à l'autre le long de la paroi latérale (15) et transversalement à la direction de sortie (R).

3. Module de coussin à gaz selon la revendication 1, **caractérisé en ce que** l'engagement des premiers et deuxièmes éléments de fixation (20, 22) est produit par un mouvement de rotation du couvercle (14) et du boîtier de module (12) l'un par rapport à l'autre, chacun en tant que tout.

4. Module de coussin à gaz selon la revendication 2 ou 3, **caractérisé en ce que** les premiers et deuxièmes éléments de fixation (20, 22) forment une fermeture à baïonnette.

5. Module de coussin à gaz selon l'une des revendications précédentes, **caractérisé en ce que** les premiers et/ou deuxièmes éléments de fixation (20, 22) sont agencés respectivement sur une paroi latérale (15).

6. Module de coussin à gaz selon l'une des revendications précédentes, **caractérisé en ce que** les premiers éléments de fixation (20) sont réalisés sous forme de pattes et les deuxièmes éléments de fixation (22) sous forme de crochets.

7. Module de coussin à gaz selon l'une des revendications précédentes, **caractérisé en ce que** la liaison de sécurité par enclenchement (24, 26) est réalisée par des creux (26) réalisés sur le boîtier de module (12 ; 120) et par des saillies (24) réalisées sur les deuxièmes éléments de fixation (22).

8. Module de coussin à gaz selon l'une des revendications précédentes, **caractérisé en ce que** la liaison de sécurité par enclenchement (24, 26) est fermée par un mouvement relatif des éléments d'enclenchement de sécurité dans une direction sensiblement perpendiculaire à la paroi latérale (15) et à la direction de sortie (R).
